# EUROPÄISCHE PATENTANMELDUNG

(11) **EP 1 927 750 A2**
(43) Veröffentlichungstag der Anmeldung: **04.06.2008**
(21) Anmeldenummer: 07117866.9
(22) Anmeldetag: 04.10.2007
(51) Int. Cl.: F04B 49/12

(54) **Mengenregelbares Förderaggregat**

(30) Priorität: 01.12.2006 DE 102006056847
(71) Anmelder: ROBERT BOSCH GMBH, 70442 Stuttgart (DE)
(72) Erfinder: Siegel, Heinz, 70435, Stuttgart (DE)

(57) **Zusammenfassung**

Die Erfindung bezieht sich auf ein Förderaggregat (22), insbesondere zur Förderung eines Hydraulikfluides zur Betätigung eines automatischen Schaltgetriebes (14). Das Förderaggregat (22) umfasst eine erste Pumpenzelle (24) und mindestens eine weitere, zweite Pumpenzelle (26). Die Fördermenge des von den Pumpenzellen (24, 26) geförderten Hydraulikfluides ist abhängig von der Drehzahl der Verbrennungskraftmaschine (10) gesteuert.

## Beschreibung

### Stand der Technik

Zur Druckversorgung und zur Betätigung von Getriebekupplungen, die z. B. an automatischen Kraftfahrzeuggetrieben vorgesehen sind, werden Förderaggregate wie z. B. Ölpumpen für das Hydraulikfluid benötigt, die zum Verstellen der Kupplungen im Rahmen eines Anstellvorganges ein großes Fördervolumen bei niedrigem Druck benötigen. Dieses niedrige Druckniveau liegt in der Größenordnung von z. B. 3 bis 10 bar. Zum Halten beziehungsweise Anpressen der Kupplung ist ein wesentlich höherer Druck erforderlich, der in der Größenordnung von bis zu 50 bar liegt, der jedoch kleine Volumenströme des Hydraulikmediums erforderlich macht. Demzufolge ist eine kostengünstige Pumpe erforderlich, die auf einfache und unkomplizierte Weise bei Erreichen von Drücken oberhalb der Grenze von etwa 10 bar von einem hohen Fördervolumenstrom, der zum Anstellen der Kupplung erforderlich ist, auf einen geringeren Fördervolumenstrom umschaltet, um die Förderverluste zu vermeiden beziehungsweise zu verringern.

Aus dem Stand der Technik sind Förderaggregate wie z. B. Ölpumpen bekannt, die als Zahnradpumpen ausgelegt sind, bei denen drei Zahnräder miteinander kämmen. Die bei der aus dem Stand der Technik bekannten Pumpe eingesetzten drei Zahnräder sind nebeneinanderliegend angeordnet, so dass jeweils ein Außenzahnrad mit dem Innenzahnrad eine Pumpenzelle bildet. Bei Erreichen eines Druckniveaus in der Größenordnung von etwa 10 bar kann eine der beiden außenliegenden Zahnräder über ein Schaltventil mit dem Saugstrang kurzgeschlossen werden, so dass in der sich ergebenden abgeschalteten Pumpenzelle mit dem Innenrad kein Druckaufbau erzeugt wird. Diese Ausführungsvariante eines Förderaggregates hat den Nachteil, dass aufgrund der nebeneinanderliegenden Anordnung zweier Außenzahnräder in Bezug auf ein Innenzahnrad ein großes Einbaumaß erforderlich wird, da durch die Anordnung der Zahnräder die Pumpe sehr breit baut. Ein weiterer Nachteil dieser aus dem Stand der Technik bekannten Ölpumpe liegt darin, dass durch das Abschalten einer jeweils außenliegenden Pumpenzelle die Fördermenge lediglich halbiert wird. Ist jedoch z. B. eine Reduzierung von wesentlich mehr als nur 50 % der vorhandenen Förderkapazität erforderlich, z. B. eine Reduzierung der Fördermenge auf etwa nur 10 bis 15 % der gesamten maximal möglichen Fördermenge, so ist diese Anforderung über die aus dem Stand der Technik bekannte Pumpenanordnung nicht realisierbar.

Des Weiteren sind aus dem Stand der Technik Hydraulikförderaggregate bekannt, die auch als Duopumpen bezeichnet werden. Die aus dem Stand der Technik bekannten Duopumpen (Bosch/Rexroth) weisen zwei durch eine Trennwand voneinander getrennte Pumpenzellen auf, wobei die beiden voneinander getrennten Pumpenzellen in einem Förderverhältnis von 50 : 50 gestaltet sind.

Bei heute in Kraftfahrzeugen eingesetzten Automatikgetrieben erfolgt die hydraulische Druckversorgung über eine Konstantpumpe, die mit der Verbrennungskraftmaschine gekoppelt ist und demzufolge abhängig von deren Drehzahl angetrieben wird. Die Auslegung des Fördervolumens der Pumpe erfolgt auf Leerlaufdrehzahl, d. h. eine Leerlauf drehzahl der Verbrennungskraftmaschine von 500 bis 600 U/min. Wird die Verbrennungskraftmaschine mit höheren Drehzahlen betrieben, was während der verschiedenen Fahrsituationen durchaus öfter auftritt, wird mehr Hydraulikfluid gefördert und ein höheres Druckniveau erzeugt als nötig, was schlussendlich einen unnötig erhöhten Kraftstoff verbrauch der Verbrennungskraftmaschine nach sich zieht. Förderaggregate für Hydraulikmedien, deren Fördermenge stellbar, d. h. regelbar ist, sind jedoch nur aufwändig und teuer herzustellen.

### Offenbarung der Erfindung

Erfindungsgemäß wird vorgeschlagen, ein Förderaggregat mit mindestens zwei Pumpenzellen, welches auch als Duopumpe bezeichnet wird, bereitzustellen, bei dem eine der mindestens zwei Pumpenzellen der Saugseite des Förderaggregates kurzgeschlossen wird, wobei dieses Kurzschließen in Abhängigkeit von der Drehzahl der Verbrennungskraftmaschine erfolgt. Durch diese Lösung werden bei hohen Drehzahlen der Verbrennungskraftmaschine unnötig hohe Volumenströme des Hydraulikfluides vermieden.

Das erfindungsgemäß vorgeschlagene Förderaggregat, welches mit der Verbrennungskraftmaschine gekoppelt wird, weist mindestens zwei Pumpenzellen auf, die z. B. durch innen- oder außenverzahnte Zahnradpaare gebildet werden. Diese Pumpenzellen des Förderaggregates können z. B. in einem Verhältnis bezüglich ihrer Fördermenge von 50 % : 50 % oder 1/3 : 2/3 dimensioniert werden. Das Kurzschließen einer der beiden Pumpenzellen, d. h. die Verbindung des Ausgangs der Pumpenzelle mit dem Eingang des Förderaggregates und dadurch eine Reduzierung der Fördermenge, erfolgt entsprechend der Fördermengenaufteilung der jeweiligen Drehzahl der Verbrennungskraftmaschine zugeordnet. Dadurch lässt sich eine unnötige Belastung der Verbrennungskraftmaschine aufgrund einer unnötig hohen Antriebsleistung des Förderaggregates über die Kurbelwelle der Verbrennungskraftmaschine vermeiden, was mit einer größtmöglichen Kraftstofferspamis einhergeht. Wird das Förderaggregat, welches bevorzugt direkt mit der Verbrennungskraftmaschine beispielsweise über deren Kurbelwelle als Antriebswelle angetrieben wird, z. B. in einem Verhältnis der Fördervolumina der mindestens zwei Pumpenzellen von 50 % : 50 % ausgelegt, so kann ein Kurzschließen einer der beiden Pumpenzellen des Förderaggregates z. B. ab einer Drehzahl der Verbrennungskraftmaschine von etwa 1500 U/min erfolgen, wodurch sich die einstellenden Verluste ab dieser Drehzahl, d. h. 1500 U/min, halbieren würden. Bei Auslegung des erfindungsgemäß vorgeschlagenen Förderaggregates mit mindestens zwei Pumpenzellen in einem Verhältnis von 1/3 : 2/3 und Kurzschließen der Pumpenzelle, die 2/3 des Fördervolumens bereitstellt, so z. B. bei einer Drehzahl von 2000 min⁻¹, reduzierte sich der Verlust auf 1/3. Mit der erfindungsgemäß vorgeschlagenen Lösung lässt sich die Gesamteinsparung von an das erfindungsgemäß vorgeschlagene Förderaggregat abzugebender Antriebsleistung über den gesamten Drehzahlbereich der Verbrennungskraftmaschine signifikant reduzieren, da die Fördermenge des erfindungsgemäß vorgeschlagenen Förderaggregates an dessen verschiedene Betriebszustände angepasst ist.

Besonders hervorzuheben ist, dass die Fördermenge drehzahlabhängig von der Drehzahl der Verbrennungskraftmaschine gesteuert wird. Dazu wird auf einen bereits an der Verbrennungskraftmaschine zu anderen Zwecken vorhandenen Drehzahlgeber zurückgegriffen, der mit dem Steuergerät der Verbrennungskraftmaschine über mindestens eine Signalleitung in Verbindung steht.

Dieser bereits vorhandene Drehzahlgeber kann verwendet werden, die Implementierung und Einbindung eines weiteren Drehzahlgebers am Steuergerät sowie an der Verbrennungskraftmaschine ist nicht erforderlich. Das Steuergerät steuert lediglich ein bevorzugt als Magnetventil ausgebildetes Schaltventil, welches ab Erreichen eines entsprechenden Drehzahlsignals, erfasst durch den Drehzahlgeber, den von der betreffenden, abzuschaltenden Pumpenzelle geförderten Volumenstrom des Hydraulikfluids wieder auf die Saugseite der Pumpe zurückbefördert, und nur eine, d. h. bevorzugt die kleinere der beiden Pumpenzellen des Förderaggregates, fördert Hydraulikfluid.

### Kurze Beschreibung der Zeichnungen

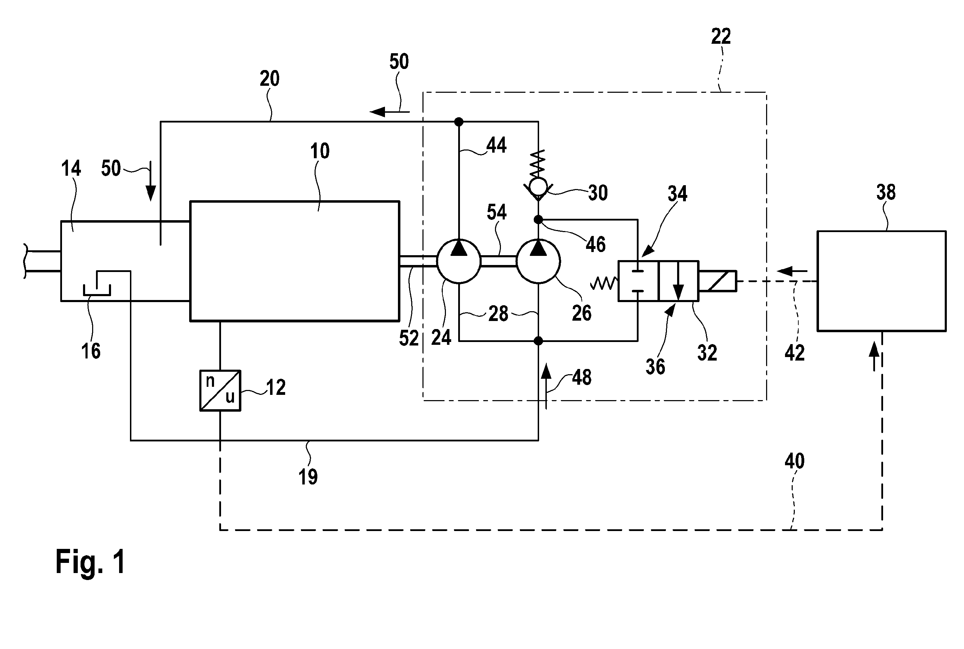

Anhand der Zeichnung wird die Erfindung nachstehend eingehender beschrieben.

Die einzige Figur zeigt eine schematische Darstellung des erfindungsgemäß vorgeschlagenen Hydraulikkreises des erfindungsgemäß vorgeschlagenen Förderaggregates, welches mit der Verbrennungskraftmaschine gekoppelt ist, und dessen hydraulischen Schaltplan.

### Ausführungsformen

Der einzigen Figur ist in schematischer Weise ein Hydraulikschaltplan zu entnehmen, welcher eine Verbrennungskraftmaschine 10 und ein mit dieser gekoppeltes automatisches Schaltgetriebe 14 zeigt. Der Verbrennungskraftmaschine 10 ist ein Drehzahlgeber 12 zugeordnet, der die Drehzahl n der Verbrennungskraftmaschine 10 erfasst und als Ausgangssignal eine Spannung U über eine Signalleitung 40 an ein Steuergerät 38 überträgt.

Das automatische Schaltgetriebe 14, welches gemäß der Zeichnung direkt mit der Verbrennungskraftmaschine 10 gekoppelt ist, umfasst ein Hydraulikfluidreservoir 16. Im Hydraulikfluidreservoir 16 ist ein Hydraulikfluid, wie z. B. Getriebeöl oder dergleichen, aufgenommen, mit welchem innerhalb des automatischen Schaltgetriebes 14 Kupplungen geöffnet beziehungsweise geschlossen werden, um ruckfrei verlaufende Schaltvorgänge innerhalb des automatischen Schaltgetriebes 14 zu realisieren.

Über eine Kurbelwelle 18 der Verbrennungskraftmaschine 10 wird ein Förderaggregat 22 direkt angetrieben. Im hier vorliegenden Falle ist das Förderaggregat 22 direkt mit der Verbrennungskraftmaschine 10 gekoppelt, angedeutet durch die Antriebswelle 52, die zwischen der Verbrennungskraftmaschine 10 und dem Förderaggregat 22 verläuft. Das Förderaggregat fördert aus dem Hydraulikfluidreservoir 16 des automatischen Schaltgetriebes 14 über eine Saugleitung 19 ein Hydraulikfluid und fördert dieses nach Kompression über eine Druckleitung 20 zurück zum automatischen Schaltgetriebe 14.

Wie aus der Zeichnung hervorgeht, umfasst das Förderaggregat 22 mindestens eine erste Pumpenzelle 24 sowie eine zweite Pumpenzelle 26. Während die erste Pumpenzelle 24 des Förderaggregates 22 über die Antriebswelle 52 von der Verbrennungskraftmaschine 10 unmittelbar direkt angetrieben wird, treibt die erste Pumpenzelle 24 über eine in der Zeichnung angedeutete Kopplungswelle 54 die zweite Pumpenzelle 26 an. Dadurch soll ausgedrückt werden, dass die beiden Pumpenzellen 24, 26 des Förderaggregates 22 für das Hydraulikmedium gemeinsam direkt angetrieben werden. Das Förderaggregat 22 saugt das Hydraulikfluid aus dem Hydraulikfluidreservoir 16 in die Saugleitung 19 an. Von dort gelangt es über einen gemeinsamen Zulauf 28 sowohl in die erste Pumpenzelle 24 als auch in die zweite Pumpenzelle 26 des mindestens zwei Pumpenzellen 24, 26 aufweisenden Förderaggregates 22. Sowohl der ersten Pumpenzelle 24 als auch der zweiten Pumpenzelle 26 sind Druckleitungsabschnitte 44, 46 zugeordnet. Ein erster Druckleitungsabschnitt 44 sowie ein zweiter Druckleitungsabschnitt 46 münden in eine gemeinsame Druckleitung 20, über welche dem automatischen Schaltgetriebe 14 das durch das Förderaggregat 22 geförderte Hydraulikfluid auf einem erhöhten Druckniveau zugeführt wird.

Der Zeichnung ist darüber hinaus entnehmbar, dass in einem der beiden Druckleitungsabschnitte 44 beziehungsweise 46 - im vorliegenden Fall im zweiten Druckleitungsabschnitt 46 - ein Rückschlagventil 30 aufgenommen ist. Das Förderaggregat 22 wird so ausgelegt, dass die erste Pumpenzelle 24 ein Fördervolumen aufweist, welches von demjenigen Fördervolumen, welches die mindestens eine weitere, im vorliegenden Falle die zweite, Pumpenzelle 26 aufweist, verschieden ist. Bevorzugt wird das Förderaggregat 22 derart ausgelegt, dass das Verhältnis der Fördervolumina der ersten Pumpenzelle 24 zur zweiten Pumpenzelle 26 20 : 80 bis 50 : 50 beträgt. Zur Reduktion der Antriebsleistung und damit zur Reduktion der von der Verbrennungskraftmaschine 10 unmittelbar an das Förderaggregat 22 über die Welle 52 übertragenen Leistung ist entscheidend, dass derjenige der Druckleitungsabschnitte 44, 46, der mit der Saugleitung 19 über das Schaltventil 32 verbunden werden kann, das höhere Fördervolumen im Vergleich zum verbleibenden Fördervolumen der beiden Pumpenzellen 24, 26 aufweist. Im in der Zeichnung dargestellten Fall weist die zweite Pumpenzelle 26 das größere der beiden Fördervolumina der Pumpenzellen 24, 26 auf. Wie aus der Zeichnung hervorgeht, ist die zweite Pumpenzelle 26 über das Rückschlagventil 30 abgesichert. Das Schaltventil 32 wird bevorzugt als Magnetventil 32 ausgebildet, welches in eine erste Schaltposition 34 schaltbar ist, in der der Durchlauf, d. h. der Rücklauf zur Saugleitung 19 gesperrt ist, und in eine zweite Schaltposition 36 schaltbar ist, in welcher der Rücklauf vom zweiten Druckleitungsabschnitt 46 in die Saugleitungen 19 freigegeben ist. Das als Magnetventil ausgebildete Schaltventil 32 wird über das Steuergerät 38 über eine Ansteuerleitung 42 angesteuert.

Im Steuergerät 38 liegt eine Drehzahlinformation vor, die an das Steuergerät 38 über die Signalleitung 40 von dem der Verbrennungskraftmaschine 10 ohnehin bereits zugeordneten Drehzahlgeber 12 übermittelt wird.

Im Leerlauf der Verbrennungskraftmaschine 10, d. h. in einem Drehzahlbereich derselben zwischen 500 min⁻¹ und 750 min⁻¹, saugt das Förderaggregat 22 aus dem Hydraulikreservoir 16 über die Saugleitung 19 Hydraulikfluid an, welches in Zuströmrichtung 48 in den gemeinsamen Zulauf 28 gelangt. Im Leerlaufbetriebsmodus der Verbrennungskraftmaschine fördern beide Pumpenzellen 24, 26 des Förderaggregates 22 in den ersten Druckleitungsabschnitt 44 sowie den zweiten Druckleitungsabschnitt 46, die in die Druckleitung 20 münden. Komprimiertes Hydraulikfluid strömt in der Druckleitung 20, in Abströmrichtung 50 in Bezug auf das Förderaggregat 22 gesehen, dem automatischen Schaltgetriebe 14 zu. Steigt die Drehzahl der Verbrennungskraftmaschine 10, so wird dies durch den Drehzahlgeber 12 detektiert und über die Signalleitung 40 an das Steuergerät 38 übermittelt. Bei Erreichen einer bestimmten Drehzahl, so z. B. von 1500 min⁻¹ oder 2000 min⁻¹, d. h. eines mittleren Drehzahlbereichs der Verbrennungskraftmaschine 10, wird über das Steuergerät 38 und die Ansteuerleitung 42 das Magnetventil 32 von der in der Zeichnung dargestellten ersten Schaltposition 34 in die zweite Schaltposition 36 gebracht. In der zweiten Schaltposition 36 sind der Ausgang der zweiten Pumpenzelle 26 vor dem Rückschlagventil 30 und die Saugleitung 19 kurzgeschlossen, d. h. die zweite Pumpenzelle 26 fördert nicht mehr in den zweiten Druckleitungsabschnitt 46 und damit auch nicht mehr in die gemeinsame Druckleitung 20. Abhängig vom gewählten Verhältnis der Fördervolumina der beiden Pumpenzellen 24, 26 des Förderaggregates 22 kann ab dieser Schaltdrehzahl, z.B. die genannten vorstehenden Drehzahlwerte, diejenige der beiden Pumpenzellen 24, 26, die das größere Fördervolumen aufweist, mit der Saugleitung 19 kurzgeschlossen werden. Dadurch wird die maximale Fördermenge des Förderaggregates 22, welches durch die mindestens zwei Pumpenzellen 24, 26 erzeugt wird, auf eine Teilfördermenge, der Kapazität der ersten Pumpenzelle 24 entsprechend, reduziert. Damit sinkt die Antriebsleistung, mit der das Förderaggregat 22 mit den mindestens zwei Pumpenzellen 24, 26 angetrieben wird und die von der Verbrennungskraftmaschine 10 aufzubringen ist.

Demzufolge sinkt auch der Kraftstoffverbrauch der Verbrennungskraftmaschinen bei Drehzahlen oberhalb der Schaltdrehzahl, bei der das Schaltventil, insbesondere das Magnetventil 32, über das Steuergerät 38 geschaltet wird und der Kurzschluss der zweiten Pumpenzelle 26 z. B. mit der Saugleitung 19 erfolgt.

Abhängig vom gewählten Verhältnis der Fördervolumina der ersten Pumpenzelle 24 in Bezug auf die zweite Pumpenzelle 26 kann z. B. bei einem Verhältnis von 50 : 50 der beiden Fördervolumina der ersten Pumpenzelle 24 und der zweiten Pumpenzelle 26 ab einem Kurzschluss bei einer Drehzahl der Verbrennungskraftmaschine 10 oberhalb der Leerlaufdrehzahl, so z. B. bei 1500 min⁻¹, die zweite Pumpenzelle 26 mit der Saugleitung 19 kurzgeschlossen werden, wodurch sich die Verluste des Förderaggregates 22 halbieren ließen. Vorausgesetzt, das Verhältnis der Fördervolumina der ersten Pumpenzelle 24 zur zweiten Pumpenzelle 26 betrüge 1 : 2 und die Abschaltdrehzahl läge bei 2000 min⁻¹, so ließen sich bei einem Kurzschließen der zweiten Pumpenzelle 26 ab dieser Drehzahl der Verbrennungskraftmaschine 10 zwei Drittel der durch das Förderaggregat 22 verursachten Verluste einsparen, was eine Reduktion des Kraftstoffverbrauches der das Förderaggregat 22 antreibenden Verbrennungskraftmaschine 10 nach sich zöge.

## Patentansprüche

1. Förderaggregat (22), insbesondere zur Förderung eines Hydraulikfluids zur Betätigung eines automatischen Schaltgetriebes (14) für eine Verbrennungskraftmaschine (10), mit einer ersten Pumpenzelle (24) und mindestens einer weiteren, zweiten Pumpenzelle (26), **dadurch gekennzeichnet, dass** die Fördermenge des von den Pumpenzellen (24, 26) geförderten Hydraulikfluides abhängig von der Drehzahl der Verbrennungskraftmaschine (10) gesteuert ist.

2. Förderaggregat (22) gemäß Anspruch 1, **dadurch gekennzeichnet, dass** die erste Pumpenzelle (24) ein von einem Fördervolumen der zweiten Pumpenzelle (26) verschiedenes Fördervolumen aufweist.

3. Förderaggregat (22) gemäß Anspruch 1, **dadurch gekennzeichnet, dass** das Förderaggregat (22) über die Verbrennungskraftmaschine (10) direkt (52) angetrieben ist.

4. Förderaggregat (22) gemäß Anspruch 1, **dadurch gekennzeichnet, dass** mindestens eine der Pumpenzellen (24, 26) mittels eines Schaltventiles (32), insbesondere eines Magnetventiles, mit der Saugseite (19) des Förderaggregates (22) verbindbar ist.

5. Förderaggregat (22) gemäß Anspruch 4, **dadurch gekennzeichnet, dass** das Schaltventil (32) über ein Steuergerät (38) angesteuert ist, welches mit einem der Verbrennungskraftmaschine (10) zugeordneten Drehzahlgeber (12) verbunden ist.

6. Förderaggregat (22) gemäß Anspruch 4, **dadurch gekennzeichnet, dass** dem Druckleitungsabschnitt (44, 46) derjenigen der mindestens zwei Pumpenzellen (24, 26), die mit der Saugseite (19) verbindbar ist, ein Rückschlagventil (30) zugeordnet ist.

7. Förderaggregat (22) gemäß Anspruch 2, **dadurch gekennzeichnet, dass** diejenige der mindestens zwei Pumpenzellen (24, 26), die ein größeres Fördervolumen aufweist, mit der Saugleitung (19) kurzschließbar ist.

8. Förderaggregat (22) gemäß Anspruch 1, **dadurch gekennzeichnet, dass** das Fördervolumen der ersten Pumpenzelle (24) < 50 % und das Fördervolumen der zweiten Pumpenzelle > 50 % der maximalen Förderleistung des Förderaggregates (22) beträgt.

9. Förderaggregat (22) gemäß Anspruch 2 **dadurch gekennzeichnet, dass** das Förderaggregat (22) als Duopumpe ausgelegt ist.

10. Förderaggregat (22) gemäß Anspruch 4, **dadurch gekennzeichnet, dass** das Schaltventil, insbesondere das Magnetventil (32), bei einer Drehzahl n der Verbrennungskraftmaschine (10) angesteuert wird, die zwischen der Leerlaufdrehzahl der Verbrennungskraftmaschine (10) und einer Drehzahl zwischen 1500 min⁻¹ bis 2500 min⁻¹ liegt.
